# EUROPÄISCHE PATENTSCHRIFT

(11) **EP 3 322 609 B1**
(45) Veröffentlichungstag und Bekanntmachung des Hinweises auf die Patenterteilung: **15.05.2019**
(21) Anmeldenummer: 16728686.3
(22) Anmeldetag: 13.06.2016
(51) Int. Cl.: B60K 7/00, B60G 21/05

(54) **LÄNGSLENKERVORRICHTUNG EINER ANTREIBBAREN VERBUNDLENKERACHSE MIT EINEM GEHÄUSE**
LONGITUDINAL CONTROL ARM DEVICE OF A DRIVABLE SEMI-INDEPENDENT SUSPENSION, COMPRISING A HOUSING
DISPOSITIF À BRAS OSCILLANT LONGITUDINAL D'UN ESSIEU À POUTRE DE TORSION POUVANT ÊTRE ENTRAÎNÉ, DOTÉ D'UN CARTER

(30) Priorität: 16.07.2015 DE 102015213354
(43) Veröffentlichungstag der Anmeldung: 23.05.2018
(73) Patentinhaber: ZF Friedrichshafen AG, 88046 Friedrichshafen (DE)
(72) Erfinder: HOLTHEIDE, Josef, 49434 Neuenkirchen (DE); WULF, Markus, 32479 Hille (DE); KALLASS, Felix, 49084 Osnabrück (DE); NORDLOH, Alfons, 49429 Visbek (DE); BEYER, Michael, 32457 Porta Westfalica (DE)
(86) Internationale Anmeldenummer: PCT/EP2016/063426
(87) Internationale Veröffentlichungsnummer: WO 2017/008967

(56) Entgegenhaltungen:
- EP-A1- 2 815 905
- EP-A1- 2 818 350
- DE-A1-102011 005 616
- DE-A1-102011 005 625

## Beschreibung

Die Erfindung betrifft eine Längslenkervorrichtung einer antreibbaren Verbundlenkerachse mit einem Gehäuse gemäß der im Oberbegriff des Patentanspruches 1 näher definierten Art.

Aus der Praxis ist eine sogenannte antreibbare Verbundlenkerachse bzw. ein Electric Twist Beam (eTB) bekannt, bei der ein elektrischer PKW-Antrieb in eine Verbundlenker-Hinterachse integriert ist. Dabei weist eine eTB jeweils am linken und rechten Rad eine kompakte Einheit bzw. einen Antriebsstrang auf, der ein Getriebe und einen Elektromotor umfasst. Der Antriebsstrang ist jeweils in einem Gehäuse angeordnet, das wiederum Teil eines Längslenkers darstellt. Die beiden jeweils fahrzeugaußenseitig angeordneten Längslenker sind über ein im Wesentlichen in Fahrzeugquerrichtung verlaufendes Querprofil miteinander verbunden sowie im Bereich von Hauptlagern karosserieseitig anbindbar. Des Weiteren sind die Längslenker im Einbauzustand über Feder- und Dämpfereinheiten zusätzlich mit einer Fahrzeugkarosserie gekoppelt. Mit den zwei separaten Antriebssträngen ist unter anderem eine gezielte, radindividuelle Drehmomentverteilung, das sogenannte Torque-Vectoring umsetzbar.

Des Weiteren geht aus der DE 10 2011 005 625 A1 eine Antriebsvorrichtung zum Antreiben eines Rades einer Verbundlenkerachse für ein elektrisch antreibbares Fahrzeug hervor, die eine elektrische Maschine und ein in Kraftflussrichtung im Zugbetrieb betrachtet abtriebsseitig der elektrischen Maschine geschaltetes Getriebe umfasst. Das Gehäuse der elektrischen Maschine oder das Gehäuse des Getriebes sind direkt mit dem Längslenker der Verbundlenkerachse verschraubt, als mehrteiliges Schweißbauteil in den Längslenker integriert oder mit dem Längslenker einteilig ausgeführt. Zusätzlich können die elektrische Maschine und das Getriebe ein gemeinsames Gehäuse aufweisen.

Einteilig mit dem Längslenker ausgeführte Gehäuse der elektrischen Maschine und/oder des Getriebes stehen dem Bestreben entgegen, das Getriebe und/oder die elektrische Maschine einer eTB als vormontierbares Modul auszuführen, das oder die während einer Endmontage auf einfache und kostengünstige Art und Weise mit dem Längslenker verbindbar sind.

Der vorliegenden Erfindung liegt die Aufgabe zugrunde, eine kostengünstige und modular aufgebaute Längslenkervorrichtung einer antreibbaren Verbundlenkerachse zur Verfügung zu stellen.

Erfindungsgemäß wird diese Aufgabe mit einer Längslenkervorrichtung mit den Merkmalen des Patentanspruches 1 gelöst.

Die erfindungsgemäße Längslenkervorrichtung einer antreibbaren Verbundlenkachse ist mit einem Gehäuse ausgebildet, innerhalb dem ein Antriebsstrang anordenbar ist und das mit einem Längslenker verbunden ist.

Erfindungsgemäß umfasst das Gehäuse einen fest mit einem Längslenker verbundenen mittleren Gehäusebereich, auf einer in Einbaulage in einem Fahrzeug einem Rad zugewandten Seite ein zur Radseite hin geschlossen ausgebildetes und auf der der Radseite abgewandten Seite offenes sowie mit dem mittleren Gehäusebereich verbundenes Gehäuseteil zumindest zur teilweisen Aufnahme einer Getriebeeinrichtung eines Antriebsstranges und auf einer der Radseite abgewandten Seite ein weiteres Gehäuseteil, das radseitig mit dem mittleren Gehäusebereich des Gehäuses lösbar verbunden ist und auf seiner der Radseite abgewandten Seite geschlossen ist sowie zur teilweisen Aufnahme einer elektrischen Maschine des Antriebsstranges vorgesehen ist.

Damit ist die Längslenkervorrichtung sowohl mit einem vormontierbaren ersten Modul, das die Getriebeeinrichtung und ein die Getriebeeinrichtung zumindest teilweise umgebendes Gehäuse aufweist, sowie mit einem zweiten Modul, das die elektrische Maschine und ein die elektrische Maschine wiederum zumindest teilweise aufnehmendes Gehäuse aufweist, ausführbar und anschließend während einer Endmontage einer antreibbaren Verbundlenkerachse mit geringem Aufwand montierbar.

Zusätzlich sind der Längslenker und der damit verbundene mittlere Gehäusebereich jeweils an unterschiedliche Fahrzeugkonzepte anpassbar und jeweils mit den die Getriebeeinrichtung und die elektrische Maschine aufweisenden Modulen koppelbar, die dann als Standardantriebsstrang ausführbar sind. Durch den nunmehr möglichen Einsatz standardisierter Baugruppen einer Längslenkervorrichtung für eine Vielzahl verschiedener Fahrzeugsysteme bzw. Fahrzeugkonzepte, sind die Längslenkervorrichtung und auch eine die erfindungsgemäße Längslenkervorrichtung aufweisende antreibbare Verbundlenkerachse besonders kostengünstig herstellbar.

Zusätzlich besteht aufgrund des modularen Aufbaus der erfindungsgemäßen Längslenkervorrichtung die Möglichkeit, den Antriebsstrang mit geringem Aufwand zu entlasten, da über die Längslenkervorrichtung im Bereich einer Fahrzeugkarosserie abzustützende Reifenkräfte bei entsprechender Gestaltung der Schnittstellen zwischen dem Gehäuseteil und dem mittleren Gehäusebereich nur zu einem geringen Anteil in die im Gehäuseinnenraum angeordneten Bauteile des Antriebsstranges eingeleitet werden, wodurch zusätzlich durch fahrdynamische Einflüsse verursachte Akustiklaufgeräusche im angestrebten Umfang reduziert werden.

Ist das Gehäuseteil mit dem mittleren Gehäusebereich einstückig verbunden und auf der dem Rad zugewandten Seite über wenigstens ein lösbar mit dem Gehäuseteil verbindbares Deckelelement geschlossen, ist zumindest die elektrische Maschine mit dem weiteren Gehäuseteil als vormontierbare Baueinheit ausführbar.

Bei einer hierzu alternativen Ausführungsform der erfindungsgemäßen Längslenkervorrichtung ist das Gehäuseteil mit dem mittleren Gehäusebereich lösbar verbunden und auf der dem Rad zugewandten Seite über wenigstens ein lösbar mit dem Gehäuseteil verbindbares Deckelelement geschlossen ausgebildet, womit dass die Getriebeeinrichtung umfassende Modul der erfindungsgemäßen Längslenkervorrichtung ebenfalls vormontierbar und somit während einer Endmontage mit geringem Aufwand mit dem mittleren Gehäuseteil und dem Längslenker verbindbar ist.

Ist das weitere Gehäuseteil auf der dem Rad abgewandten Seite über wenigstens ein lösbar mit dem Gehäuseteil verbindbares Deckelelement geschlossen ausgeführt, sind Wartungsarbeiten im Bereich der elektrischen Maschine mit geringem Aufwand durchführbar.

Sind der mittlere Gehäusebereich und der Längslenker einstückig ausgebildet, sind Reifenkräfte wiederum über ein einteiliges und mit geringem konstruktivem Aufwand belastungsgerecht ausführbares Bauteil im Bereich einer Fahrzeugkarosserie abstützbar.

Ist das Gehäuseteil als eine Zwischenplatte mit einem Aufnahmebereich ausgebildet, in dem zumindest ein Teil einer Getriebeeinrichtung des Antriebsstranges anordenbar ist, ist der die Getriebeeinrichtung umfassende Teil des Antriebsstranges im gewünschten Umfang als vormontierbares Bauteil herstellbar und während einer Endmontage einer antreibbaren Verbundlenkerachse mit geringem Aufwand in die Längslenkervorrichtung integrierbar.

Ist der Längslenker mit einer Aufnahme ausgebildet, in dessen Bereich der Längslenker mit einem Querprofil einer Verbundlenkerachse verbindbar ist, ist eine antreibbare Verbundlenkerachse wiederum mit geringem Aufwand montierbar.

Weist der Längslenker eine weitere Aufnahme auf, in dessen Bereich ein Hauptlager anordenbar ist, über das eine antreibbare Verbundlenkerachse in an sich bekannter Art und Weise an einer Fahrzeugachse anbindbar ist, ist eine Montage einer antreibbaren Verbundlenkerachse in einem Fahrzeug wiederum mit geringem Aufwand durchführbar.

Umfasst eine Verbindungseinrichtung einen Koppelbereich mit dem Längslenker und/oder mit dem mittleren Gehäusebereich sowie einen Verbindungsbereich, wobei im Verbindungsbereich eine Federeinrichtung und/oder eine Dämpfungseinrichtung an der Verbindungseinrichtung anbindbar ist, ist die Verbindungseinrichtung als eigenes Bauteil ausführbar, das während einer Montage der Längslenkervorrichtung mit dem Längslenker und/oder mit dem mittleren Gehäusebereich verbindbar ist und anschließend gemeinsam mit der Längslenkervorrichtung mit einem Querprofil in Wirkverbindung bringbar ist.

Wenn eine Ausgangswelle einer elektrischen Maschine des Antriebsstranges im Bereich des weiteren Gehäuseteils, des mittleren Gehäusebereiches oder des Gehäuseteils des Gehäuses mit einer Welle eines Planetengetriebes verbindbar und eine weitere Welle des Planetengetriebes durch eine Öffnung des Gehäuseteils hindurch führbar und auf der der elektrischen Maschine abgewandten Seite des mittleren Gehäusebereiches mit einer Stirnradstufe der Getriebeeinrichtung verbindbar ist, ist eine antreibbare Verbundlenkerachse im gewünschten Umfang mit einem zweistufigen Getriebe und einem Hochdrehzahlkonzept ausführbar, die die Verwendung einer für den Alltagseinsatz wirkungsgradoptimierten elektrischen Maschine ermöglichen, die wiederum eine hohe Leistung bei gleichzeitig reduziertem Materialeinsatz bereitstellt. Mit einem solchen Antrieb sind bereits während eines Anfahrvorganges hohe Drehmomente im Bereich der Fahrzeugachse realisierbar und ein mit einer eine erfindungsgemäße Längslenkervorrichtung aufweisenden antreibbaren Verbundlenkerachse ausgeführtes Fahrzeug ist mit ansprechenden Fahrleistungen zur Verfügung stellbar.

Bei einer konstruktiv einfachen kostengünstigen Ausführungsform der erfindungsgemäßen Längslenkervorrichtung ist zumindest eines der Stirnräder der Stirnradstufe in einer Lageraufnahme der Seitenwand lagerbar.

Eine Radwelle ist mit einer weiteren konstruktiven einfachen sowie bauraum- und kostengünstigen Ausführungsform der erfindungsgemäßen Längslenkervorrichtung durch das Deckelelement hindurch in den Gehäuseinnenraum vorkragend montierbar.

Bei weiteren vorteilhaften Ausführungsformen der erfindungsgemäßen Längslenkervorrichtung ist diese zumindest bereichsweise als Schmiede- und/oder Gussteil ausgebildet, wobei bei einer Ausführung der Längslenkervorrichtung als Schmiedeteil bei gleichen Bauteilabmessungen höhere Reifenkräfte über die Längslenkervorrichtung in Richtung der Fahrzeugkarosserie führbar sind, während als Gussteil ausgeführte Längslenkervorrichtungen auf einfach Art und Weise in Vergleich zu Schmiedeteilen mit höheren Bauteiltoleranzen herstellbar sind, wodurch eine Fertigung der Längslenkervorrichtung kostengünstiger ist.

Ist das weitere Gehäuseteil wenigstens annähernd topfförmig ausgeführt, ist eine elektrische Maschine mit geringem Aufwand im weiteren Gehäuseteil anordenbar und als bauraumgünstiges, patronenförmiges und vorgefertigtes Modul am mittleren Gehäusebereich montierbar.

Dabei besteht auch die Möglichkeit, neben der elektrischen Maschine auch eine Leistungselektronik nebst einem Umrichter im weiteren Gehäuseteil anzuordnen.

Sowohl die in den Patentansprüchen angegebenen Merkmale als auch die in den nachfolgenden Ausführungsbeispielen der erfindungsgemäßen Längslenkervorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Längslenkervorrichtung ergeben sich aus den Patentansprüchen und den nachfolgend und unter Bezugnahme auf die Zeichnung prinzipmäßig beschriebenen Ausführungsbeispielen, wobei in der Beschreibung der verschiedenen Ausführungsbeispielen zugunsten der Übersichtlichkeit für bau- und funktionsgleiche Bauteile dieselben Bezugszeichen verwendet werden.

Es zeigt:
Fig. 1 eine Explosionsdarstellung einer ersten Ausführungsform einer Längslenkervorrichtung in einer Ansicht von oben;
Fig.2 die Längslenkervorrichtung gemäß Fig. 1 in einer Explosionsdarstellung in einer Ansicht von schräg oben;
Fig. 3 die Längslenkervorrichtung gemäß Fig. 1 in einer Seitenansicht;
Fig. 4 eine Explosionsdarstellung einer zweiten Ausführungsform in einer Ansicht von oben;
Fig. 5 die Längslenkervorrichtung gemäß Fig. 4 in einer Explosionsdarstellung in einer Ansicht von schräg oben; und
Fig. 6 die Längslenkervorrichtung gemäß Fig. 4 in einer Seitenansicht.

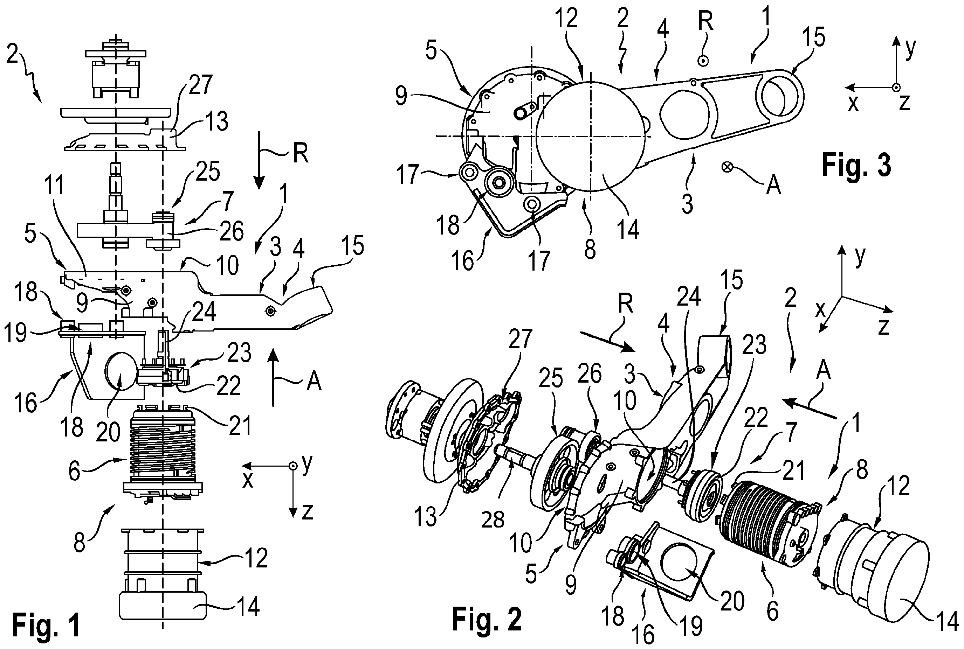

Fig. 1 und Fig. 2 zeigen eine erste Ausführungsform einer Längslenkervorrichtung 1 einer antreibbaren Verbundlenkerachse 2 jeweils in einer Explosionsdarstellung. Die antreibbare Verbundlenkerachse weist in Einbaulage in einem Fahrzeug auf jeder Fahrzeugseite eine Längslenkervorrichtung auf, die im Wesentlichen in Fahrzeuglängsrichtung x verlaufend verbaut sind und im Bereich von Aufnahmen 3 eines Längslenkers 4 vorzugsweise form- und kraftschlüssig mit einem sich in Fahrzeugquerrichtung erstreckenden Querprofil verbunden sind. Zusätzlich zeigt Fig. 3 eine Seitenansicht der Längslenkervorrichtung 1 gemäß Fig. 1 und gemäß Fig. 2, wobei in Fig. 3 eine in Einbaulage der Längslenkervorrichtung 1 in einem Fahrzeug eine einem Fahrzeugrad abgewandte Seite A der Längslenkervorrichtung dargestellt ist. Die Längslenkervorrichtung 1 umfasst ein Gehäuse 5, innerhalb dem ein eine elektrische Maschine 6 und eine Getriebeeinrichtung 7 umfassender Antriebsstrang 8 integriert ist und das mit dem Längslenker 4 verbunden ist.

Das Gehäuse 5 ist mit einem fest mit dem Längslenker 4 verbundenen mittleren Gehäusebereich 9 ausgeführt. Des Weiteren weist das Gehäuse 5 auf einer in Einbaulage in einem Fahrzeug einem Rad zugewandten Seite R des mittleren Gehäusebereiches 9 ein zur Radseite R hin geschlossen ausgebildetes und auf der der Radseite R abgewandten Seite A offenes sowie mit dem mittleren Gehäusebereich 9 verbundenes Gehäuseteil 11 zur zumindest teilweisen Aufnahme der Getriebeeinrichtung 7 des Antriebsstranges 8 auf. Auf der der Radseite R abgewandten Seite A des mittleren Gehäusebereiches ist ein weiteres Gehäuseteil 12 des Gehäuses 5 vorgesehen, das radseitig mit dem mittleren Gehäusebereich 9 des Gehäuses 5 lösbar verbunden ist und auf seiner der Radseite R abgewandten Seite geschlossen ist sowie zumindest zur teilweisen Aufnahme der elektrischen Maschine 6 des Antriebsstranges 8 vorgesehen ist.

Bei der in Fig. 1 bis Fig. 3 dargestellten ersten Ausführungsform der Längslenkervorrichtung 1 ist das Gehäuseteil 11 mit dem mittleren Gehäusebereich 9 einstückig ausgeführt und auf der dem Rad zugewandten Seite R über ein lösbar mit dem Gehäuseteil 11 verbundenes Deckelelement 13 geschlossen. Zusätzlich ist das weitere Gehäuseteil 12 auf der dem Rad abgewandten Seite A über ein lösbar mit dem weiteren Gehäuseteil 12 verbundenes Deckelelement 14 geschlossen ausgebildet.

Der mittlere Gehäusebereich 9 und der Längslenker 4 sind vorliegend einstückig ausgebildet und jeweils fahrzeugspezifisch ausgeführt, während die Gehäuseteile 11 und 12 sowie die damit verbundenen Deckelelemente 13 und 14 standardisierte Bauteile darstellen, die jeweils mit einer definierten Schnittstelle mit dem fahrzeugspezifisch ausgeführten Längslenker verbundenen mittleren Gehäuseteil 9 zusammenwirken.

Neben der Aufnahme 3 weist der Längslenker 4 eine weitere Aufnahme 15 auf, in dessen Bereich ein vorzugsweise als Gummilager ausgeführtes Hauptlager einsetzbar ist, über das die Verbundlenkerachse 2 in an sich bekannter Art und Weise im Bereich einer Fahrzeugkarosserie eines Fahrzeuges anwendbar ist.

Eine Verbindungseinrichtung 16 ist vorliegend mit dem mittleren Gehäusebereich 9 über Verschraubungen 17 verbunden, in deren Bereich eine Federeinrichtung und eine Dämpfereinrichtung anbindbar sind. Hierfür ist die Verbindungseinrichtung 24 mit einem Koppelbereich 18 mit dem mittleren Gehäusebereich 9 verbunden und mit Verbindungsbereichen 19, 20 ausgebildet, über die Federeinrichtung bzw. die Dämpfereinrichtung mit der Verbindungseinrichtung 16 in Wirkverbindung stehen.

Eine Ausgangswelle 21 der elektrischen Maschine 6 des Antriebsstranges 8 ist in Abhängigkeit des jeweils vorliegenden Anwendungsfalles im Bereich des weiteren Gehäuseteils 12, des mittleren Gehäusebereiches 9 oder des Gehäuseteils 11 des Gehäuses 5 mit einer Welle 22 eines Planetengetriebes 23 verbunden, die ein Hohlrad, ein Planetensteg oder ein Sonnenrad sein kann. Eine weitere Welle 24 des Planetengetriebes 23, die wiederum ein Hohlrad, ein Planetensteg oder ein Sonnenrad sein kann, ist durch die Öffnung des Gehäuseteils 11 hindurchgeführt und auf der der elektrischen Maschine 6 abgewandten Seite des mittleren Gehäusebereiches 9 mit einer Stirnradstufe 25 der Getriebeeinrichtung 7 gekoppelt. Zumindest eines der Stirnräder 26 der Stirnradstufe 25 ist in einer Lageraufnahme 27 des Deckelelementes 13 drehbar gelagert. Zusätzlich ist eine Radwelle 28 durch das Deckelelement 13 in einem Gehäuseinnenraum 10 vorkragend montiert.

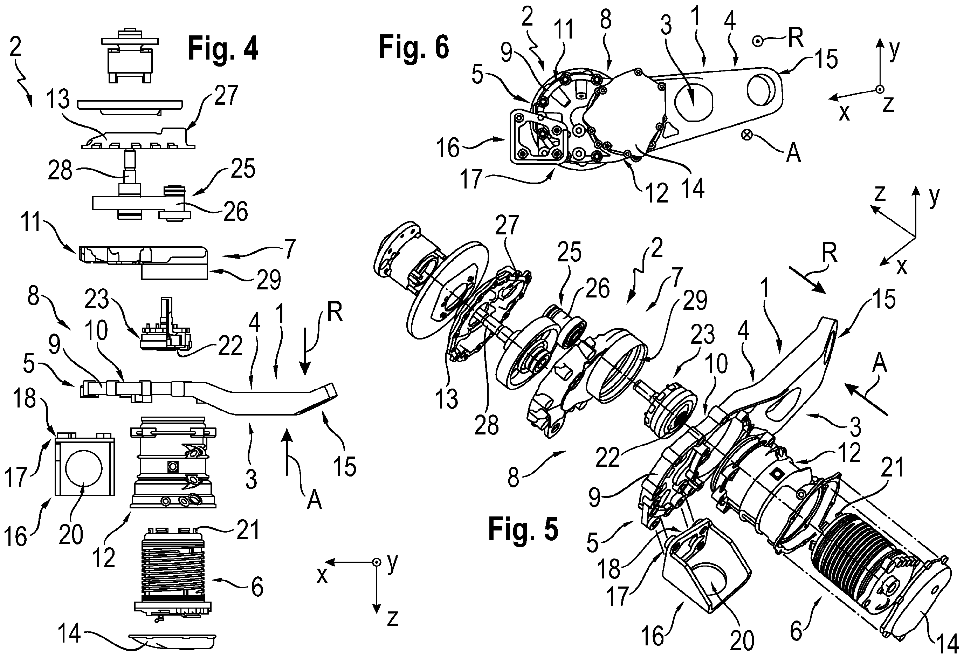

Fig. 4 bis Fig. 6 zeigen ein zweites Ausführungsbeispiel der Längslenkervorrichtung 1, welche dieselbe Funktionsweise wie die erste Ausführungsform der Längslenkervorrichtung gemäß Fig. 1 bis Fig. 3 aufweist, weshalb in der nachfolgenden Beschreibung im Wesentlichen lediglich auf die Unterschiede zwischen den beiden Ausführungsformen der Längslenkervorrichtung 1 näher eingegangen wird und bezüglich der weiteren Funktionsweise der Längslenkervorrichtung 1 gemäß Fig. 4 bis Fig. 6 auf die vorstehende Beschreibung zu Fig. 1 bis Fig. 3 verwiesen wird.

Bei der zweiten Ausführungsform der Längslenkervorrichtung 1 ist das Gehäuseteil 11 mit dem mittleren Gehäusebereich 9 über Verschraubungen lösbar verbunden und auf der dem Rad zugewandten Seite R über das lösbar mit dem Gehäuseteil 11 verbundene Deckelelement 13 geschlossen ausgebildet. Dabei stellt das Gehäuseteil 11 eine Zwischenplatte mit einem Aufnahmebereich 29 dar, in dem zumindest ein Teil der Getriebeeinrichtung 7, vorliegend das Planetengetriebe 23, des Antriebsstranges 8 angeordnet ist.

Die Längslenkervorrichtung 1 bzw. dessen Baugruppen sind in Abhängigkeit des jeweils vorliegenden Anwendungsfalles als Gussteil, als Schmiedeteil, als Frästeil, als Biege- und Formteil, als Tiefziehteil oder dergleichen ausführbar.

### Bezugszeichen

- 1: Längslenkervorrichtung
- 2: antreibbare Verbundlenkerachse
- 3: Aufnahme
- 4: Längslenker
- 5: Gehäuse
- 6: elektrische Maschine
- 7: Getriebeeinrichtung
- 8: Antriebsstrang
- 9: mittlerer Gehäusebereich
- 10: Gehäuseinnenraum
- 11: Gehäuseteil
- 12: weiteres Gehäuseteil
- 13: Deckelelement
- 14: weiteres Deckelelement
- 15: weitere Aufnahme
- 16: Verbindungseinrichtung
- 17: Verschraubung
- 18: Koppelbereich
- 19, 20: Verbindungsbereich
- 21: Ausgangswelle
- 22: Welle des Planetengetriebes
- 23: Planetengetriebe
- 24: weitere Welle des Planetengetriebes
- 25: Stirnradstufe
- 26: Stirnrad
- 27: Lageraufnahme
- 28: Radwelle
- 29: Aufnahmebereich
- A: eine einem Rad abgewandte Seite der Längslenkervorrichtung
- R: Radseite der Längslenkervorrichtung
- x: Fahrzeuglängsrichtung
- y: Fahrzeughochrichtung
- z: Fahrzeugquerrichtung

## Patentansprüche

1. Längslenkervorrichtung (1) einer antreibbaren Verbundlenkerachse (2) mit einem Gehäuse (5), innerhalb dem ein Antriebsstrang (8) anordenbar ist und das mit einem Längslenker (4) verbunden ist, **dadurch gekennzeichnet, dass** das Gehäuse (5) einen fest mit dem Längslenker (4) verbundenen mittleren Gehäusebereich (9), auf einer in Einbaulage in einem Fahrzeug einem Rad zugewandten Seite (R) des mittleren Gehäusebereiches ein zur Radseite (R) hin geschlossen ausgebildetes und auf der der Radseite (R) abgewandten Seite (A) offenes sowie mit dem mittleren Gehäusebereich (9) verbundenes Gehäuseteil (11) zur zumindest teilweisen Aufnahme einer Getriebeeinrichtung (7) des Antriebsstranges (8) und auf der der Radseite (R) abgewandten Seite (A) des mittleren Gehäusebereiches (9) ein weiteres Gehäuseteil umfasst, das radseitig mit dem mittleren Gehäusebereich des Gehäuses (12) lösbar verbunden ist und auf seiner der Radseite (R) abgewandten Seite (A) geschlossen ist sowie zur teilweisen Aufnahme einer elektrischen Maschine (6) des Antriebsstranges (8) vorgesehen ist.

2. Längslenkervorrichtung nach Anspruch 1, **dadurch gekennzeichnet, dass** das Gehäuseteil (11) mit dem mittleren Gehäusebereich (9) einstückig verbunden ist und auf der dem Rad zugewandten Seite (R) über wenigstens ein lösbar mit dem Gehäuseteil (11) verbindbares Deckelelement (13) geschlossen ausgebildet ist.

3. Längslenkervorrichtung nach Anspruch 1, **dadurch gekennzeichnet, dass** das Gehäuseteil (11) mit dem mittleren Gehäusebereich (9) lösbar verbunden ist und auf der dem Rad zugewandten Seite (R) über wenigstens ein lösbar mit dem Gehäuseteil verbindbares Deckelelement (13) geschlossen ausgebildet ist.

4. Längslenkervorrichtung nach einem der Ansprüche 1 bis 3, **dadurch gekennzeichnet, dass** das weitere Gehäuseteil (12) auf der dem Rad abgewandten Seite (A) über wenigstens ein lösbar mit dem weiteren Gehäuseteil (12) verbindbares Deckelelement (14) geschlossen ausgeführt ist.

5. Längslenkervorrichtung nach einem der Ansprüche 1 bis 4, **dadurch gekennzeichnet, dass** der mittlere Gehäusebereich (9) und der Längslenker (4) einstückig ausgebildet sind.

6. Längslenkervorrichtung nach einem der Ansprüche 2 bis 5, **dadurch gekennzeichnet, dass** das Gehäuseteil (11) als eine Zwischenplatte mit einem Aufnahmebereich (29) ausgebildet ist, in dem zumindest ein Teil einer Getriebeeinrichtung (7) des Antriebsstranges (8) anordenbar ist.

7. Längslenkervorrichtung nach einem der Ansprüche 1 bis 6, **dadurch gekennzeichnet, dass** der Längslenker (4) eine Aufnahme (3) aufweist, in dessen Bereich der Längslenker (4) mit einem Querprofil einer Verbundlenkerachse (2) verbindbar ist.

8. Längslenkervorrichtung nach einem der Ansprüche 1 bis 7, **dadurch gekennzeichnet, dass** der Längslenker (4) eine weitere Aufnahme (15) aufweist, in dessen Bereich ein Hauptlager anordenbar ist.

9. Längslenkervorrichtung nach einem der Ansprüche 1 bis 8, **dadurch gekennzeichnet, dass** eine Verbindungseinrichtung (16) einen Koppelbereich (18) mit dem Längslenker (4) sowie einen Verbindungsbereich (19,20) aufweist, wobei im Verbindungsbereich (19,20) eine Federeinrichtung und/oder eine Dämpfereinrichtung an der Verbindungseinrichtung anbindbar ist.

10. Längslenkervorrichtung nach einem der Ansprüche 1 bis 9, **dadurch gekennzeichnet, dass** eine Ausgangswelle (21) der elektrischen Maschine (6) des Antriebsstranges (8) im Bereich des weiteren Gehäuseteils (12), des mittleren Gehäusebereiches (9) oder des Gehäuseteils (11) des Gehäuses (5) mit einer Welle (22) eines Planetengetriebes (23) verbindbar und eine weitere Welle (24) des Planetengetriebes (23) durch eine Öffnung des Gehäuseteils (11) hindurch führbar und auf der der elektrischen Maschine (6) abgewandten Seite des mittleren Gehäusebereiches (9) mit einer Stirnradstufe (25) der Getriebeeinrichtung (7) verbindbar ist.

11. Längslenkervorrichtung nach Anspruch 10, **dadurch gekennzeichnet, dass** zumindest eines der Stirnräder (26) der Stirnradstufe (25) in einer Lageraufnahme (27) des Deckelelementes (13) drehbar gelagert ist.

12. Längslenkervorrichtung nach einem der Ansprüche 1 bis 11, **dadurch gekennzeichnet, dass** eine Radwelle (28) durch das Deckelelement (13) hindurch in einen Gehäuseinnenraum (10) vorkragend montierbar ist.

13. Längslenkervorrichtung nach einem der Ansprüche 1 bis 12, **dadurch gekennzeichnet, dass** die Längslenkervorrichtung (1) zumindest bereichsweise als Schmiede- und/oder Gussteil ausgebildet ist.

14. Längslenkervorrichtung nach einem der Ansprüche 1 bis 13, **dadurch gekennzeichnet, dass** das weitere Gehäuseteil (12) wenigstens annähernd topfförmig ausgeführt ist.

## Claims

1. Trailing arm apparatus (1) of a drivable torsion beam axle (2) having a housing (5), within which a drive train (8) can be arranged and which is connected to a trailing arm (4), **characterized in that** the housing (5) comprises a central housing region (9) which is connected fixedly to the trailing arm (4), a housing part (11) for at least partially receiving a transmission device (7) of the drive train (8) on a side (R) of the central housing region which faces a wheel in the installed position in a vehicle, which housing part (11) is of closed configuration towards the wheel side (R), is open on the side (A) which faces away from the wheel side (R) and is connected to the central housing region (9), and a further housing part on that side (A) of the central housing region (9) which faces away from the wheel side (R), which further housing part is connected releasably on the wheel side to the central housing region of the housing (12), is closed on its side (A) which faces away from the wheel side (R), and is provided for partially receiving an electric machine (6) of the drive train (8).

2. Trailing arm apparatus according to Claim 1, **characterized in that** the housing part (11) is connected in one piece to the central housing region (9), and is of closed configuration on the side (R) which faces the wheel via at least one cover element (13) which can be connected releasably to the housing part (11).

3. Trailing arm apparatus according to Claim 1, **characterized in that** the housing part (11) is connected releasably to the central housing region (9), and is of closed configuration on the side (R) which faces the wheel via at least one cover element (13) which can be connected releasably to the housing part.

4. Trailing arm apparatus according to one of Claims 1 to 3, **characterized in that** the further housing part (12) is of closed configuration on the side (A) which faces away from the wheel via at least one cover element (14) which can be connected releasably to the further housing part (12).

5. Trailing arm apparatus according to one of Claims 1 to 4, **characterized in that** the central housing region (9) and the trailing arm (4) are configured in one piece.

6. Trailing arm apparatus according to one of Claims 2 to 5, **characterized in that** the housing part (11) is configured as an intermediate plate with a receiving region (29), in which at least one part of a transmission device (7) of the drive train (8) can be arranged.

7. Trailing arm apparatus according to one of Claims 1 to 6, **characterized in that** the trailing arm (4) has a seat (3), in the region of which the trailing arm (4) can be connected to a transverse profile of a torsion beam axle (2).

8. Trailing arm apparatus according to one of Claims 1 to 7, **characterized in that** the trailing arm (4) has a further seat (15), in the region of which a main bearing can be arranged.

9. Trailing arm apparatus according to one of Claims 1 to 8, **characterized in that** a connecting device (16) has a coupling region (18) to the trailing arm (4) and a connecting region (19, 20), it being possible for a spring device and/or a damping device to be attached to the connecting device in the connecting region (19, 20).

10. Trailing arm apparatus according to one of Claims 1 to 9, **characterized in that** an output shaft (21) of the electric machine (6) of the drive train (8) can be connected to a shaft (22) of a planetary transmission (23) in the region of the further housing part (12), the central housing region (9) or the housing part (11) of the housing (5), and a further shaft (24) of the planetary transmission (23) can be guided through an opening of the housing part (11) and can be connected to a spur gear stage (25) of the transmission device (7) on that side of the central housing region (9) which faces away from the electric machine (6).

11. Trailing arm apparatus according to Claim 10, **characterized in that** at least one of the spur gears (26) of the spur gear stage (25) is mounted rotatably in a bearing seat (27) of the cover element (13).

12. Trailing arm apparatus according to one of Claims 1 to 11, **characterized in that** a wheel shaft (28) can be mounted so as to project through the cover element (13) into a housing interior space (10).

13. Trailing arm apparatus according to one of Claims 1 to 12, **characterized in that** the trailing arm apparatus (1) is configured at least in regions as a forged and/or cast part.

14. Trailing arm apparatus according to one of Claims 1 to 13, **characterized in that** the further housing part (12) is of at least approximately pot-shaped configuration.

## Revendications

1. Dispositif à bras oscillant longitudinal (1) d'un essieu arrière à traverse déformable en torsion (2) pouvant être entraîné, comprenant un boîtier (5) à l'intérieur duquel une chaîne cinématique (8) peut être disposée et lequel est relié à un bras oscillant longitudinal (4), **caractérisé en ce que** le boîtier (5) comporte une zone de boîtier (9) centrale reliée solidement au bras oscillant longitudinal (4) et, sur un côté (R) de la zone de boîtier centrale tourné vers une roue dans la position d'installation dans un véhicule, une partie de boîtier (11) formée de manière fermée vers le côté roue (R) et ouverte sur le côté (A) opposé au côté roue (R) et reliée à la zone de boîtier (9) centrale pour loger au moins partiellement un dispositif de transmission (7) de la chaîne cinématique (8) et, sur le côté (A) de la zone de boîtier (9) centrale opposé au côté roue (R), une autre partie de boîtier qui est reliée de manière amovible, côté roue, à la zone de boîtier centrale du boîtier (12) et qui est fermée sur son côté (A) opposé au côté roue (R) et qui est destinée à loger partiellement un moteur électrique (6) de la chaîne cinématique (8).

2. Dispositif à bras oscillant longitudinal selon la revendication 1, **caractérisé en ce que** la partie de boîtier (11) est reliée d'un seul tenant à la zone de boîtier (9) centrale et est, sur le côté (R) tourné vers la roue, réalisée de manière fermée par le biais d'au moins un élément de couvercle (13) pouvant être relié de manière amovible à la partie de boîtier (11).

3. Dispositif à bras oscillant longitudinal selon la revendication 1, **caractérisé en ce que** la partie de boîtier (11) est reliée de manière amovible à la zone de boîtier (9) centrale et est, sur le côté (R) tourné vers la roue, réalisée de manière fermée par le biais d'au moins un élément de couvercle (13) pouvant être relié de manière amovible à la partie de boîtier.

4. Dispositif à bras oscillant longitudinal selon l'une des revendications 1 à 3, **caractérisé en ce que** l'autre partie de boîtier (12) est, sur le côté (A) opposé à la roue, réalisée de manière fermée par le biais d'au moins un élément de couvercle (14) pouvant être relié de manière amovible à l'autre partie de boîtier (12).

5. Dispositif à bras oscillant longitudinal selon l'une des revendications 1 à 4, **caractérisé en ce que** la zone de boîtier (9) centrale et le bras oscillant longitudinal (4) sont formés d'un seul tenant.

6. Dispositif à bras oscillant longitudinal selon l'une des revendications 2 à 5, **caractérisé en ce que** la partie de boîtier (11) est réalisée en tant que plaque intermédiaire dotée d'une zone de logement (29) dans laquelle au moins une partie d'un dispositif de transmission (7) de la chaîne cinématique (8) peut être disposée.

7. Dispositif à bras oscillant longitudinal selon l'une des revendications 1 à 6, **caractérisé en ce que** le bras oscillant longitudinal (4) comprend un logement (3) dans la zone duquel le bras oscillant longitudinal (4) peut être relié à un profilé transversal d'un essieu arrière à traverse déformable en torsion (2).

8. Dispositif à bras oscillant longitudinal selon l'une des revendications 1 à 7, **caractérisé en ce que** le bras oscillant longitudinal (4) comprend un autre logement (15) dans la zone duquel un palier principal peut être disposé.

9. Dispositif à bras oscillant longitudinal selon l'une des revendications 1 à 8, **caractérisé en ce qu'**un dispositif de liaison (16) comprend une zone d'accouplement (18) au bras oscillant longitudinal (4) ainsi qu'une zone de liaison (19, 20), un dispositif ressort et/ou un dispositif amortisseur pouvant être relié(s) au dispositif de liaison dans la zone de liaison (19, 20).

10. Dispositif à bras oscillant longitudinal selon l'une des revendications 1 à 9, **caractérisé en ce qu'**un arbre de sortie (21) du moteur électrique (6) de la chaîne cinématique (8) peut être relié à un arbre (22) d'une transmission planétaire (23) dans la zone de l'autre partie de boîtier (12), de la zone de boîtier (9) centrale ou de la partie de boîtier (11) du boîtier (5), et un autre arbre (24) de la transmission planétaire (23) peut être guidé à travers une ouverture de la partie de boîtier (11) et peut être relié à un étage de pignons droits (25) du dispositif de transmission (7) sur le côté de la zone de boîtier (9) centrale opposé au moteur électrique (6).

11. Dispositif à bras oscillant longitudinal selon la revendication 10, **caractérisé en ce qu'**au moins l'un des pignons droits (26) de l'étage à pignons droits (25) est monté à rotation dans un logement de palier (27) de l'élément de couvercle (13).

12. Dispositif à bras oscillant longitudinal selon l'une des revendications 1 à 11, **caractérisé en ce qu'**un arbre de roue (28) peut être monté à travers l'élément de couvercle (13) de manière saillante dans un espace intérieur de boîtier (10).

13. Dispositif à bras oscillant longitudinal selon l'une des revendications 1 à 12, **caractérisé en ce que** le dispositif à bras oscillant longitudinal (1) est réalisé au moins dans certaines zones sous forme de pièce forgée et/ou coulée.

14. Dispositif à bras oscillant longitudinal selon l'une des revendications 1 à 13, **caractérisé en ce que** l'autre partie de boîtier (12) est réalisée au moins approximativement en forme de pot.
